Europäisches Patentamt

European Patent Office

Office européen des brevets

(19)

(11) **EP 1 176 542 A1**

(12) **EUROPÄISCHE PATENTANMELDUNG**

(43) Veröffentlichungstag:
**30.01.2002 Patentblatt 2002/05**

(51) Int Cl.$^7$: **G06K 7/10**, G06K 7/08

(21) Anmeldenummer: **00116069.6**

(22) Anmeldetag: **27.07.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(71) Anmelder: **Häni- Prolectron AG**
**9552 Bronschhofen (CH)**

(72) Erfinder: **Lauper, Alfred**
**8047 Zürich (CH)**

(74) Vertreter: **Zedlitz, Peter, Dipl.-Inf.**
**Patentanwalt, Postfach 22 13 17**
**80503 München (DE)**

(54) **Verfahren und System zur Erzeugung eines quasi-isotropen Magnetwechselfeldes**

(57)    Für das Wecken von tragbaren elektronischen Billetten, wie z.B. Smart-Cards, mittels eines Magnetwechselfeldes ist es wichtig, dass das Wecken zuverlässig und unabhängig von ihrer Lage erfolgt. Zur Erzeugung eines über ein bestimmtes Zeitintervall im wesentlichen isotropen Magnetwechselfeldes wird in einer Ausführungsform der vorliegenden Erfindung eine Antennenanordnung 5 vorgeschlagen, die zwei ineinander und nicht planparallel (10, 20) angeordnete Rahmenantennen (1,2) sowie eine dritte Rahmenantenne (3) umfasst. Den Rahmenantennen (1, 2) wird je ein periodisches und der Rahmenantenne (3) wird ein moduliertes Signal zugeführt, so dass der aus den einzelnen Komponenten $\vec{H_x}$, $\vec{H_y}$ und $\vec{H_z}$ resultierende Feldvektor $\vec{H}$ über ein Zeitintervall praktisch jede Richtung einnimmt. Dadurch werden im Umgebungsbereich der Antennenanordnung befindliche Billette zuverlässig geweckt.

Fig. 1a

Fig. 1b

**Beschreibung**

Die vorliegende Erfindung betrifft ein Verfahren und ein System zur Erzeugung eines quasi-isotropen Magnetwechselfeldes nach den Oberbegriffen der Patentansprüche 1, 11 und 21.

Aus WO 98/53420 ist ein drahtloses Kommunikationssystem bekannt, das zwischen einem Terminal und einer Mehrzahl von tragbaren Objekten eine Kommunikation mittels eines modulierten Magnetwechselfeldes ermöglicht.

Diese tragbaren Objekte sind vielfach als sogenannte Smart-Cards ausgebildet, oft wird dafür auch die Bezeichnung elektronisches Billett verwendet. Solche elektronischen Billette weisen ein Empfangsmodul und meist auch ein Sendemodul auf. Sie haben üblicherweise eine Grösse von 53 x 85mm$^2$. Die Energieversorgung kann über eine eingebaute Energiequelle, z.B. eine Batterie und/oder durch ein Magnetwechselfeld erfolgen. Um den Energieverbrauch zu minimieren, ist für den Betrieb ein Schlafmodus (sleep mode) vorgesehen: Durch den Eintritt einer solchen Smart-Card in ein solches Wechselfeld wird in einer auf der Smart-Card angeordneten Antenne eine Spannung induziert, mit der die betreffende Smart-Card in einen Aktivzustand versetzt werden kann. Erfolgt im Anschluss daran keine weitere Kommunikation, fällt die Smart-Card nach einer festgelegten Zeit in den energiesparenden Schlafmodus zurück. Ein solches Verfahren und eine Ausführung einer solchen Smart-Card ist aus EP 0 902 353 bekannt. Der dadurch resultierende geringere Energieverbrauch ermöglicht eine höhere Autonomie. Für solche Anwendungen sind wegen der sich ergebenden Nahfeldeffekte Frequenzen der Grösse 6.78 MHz, 13,56 MHz oder 27,1 MHz gebräuchlich.

Da mit der übertragenen Information eine Verrechnung einer bezogenen Leistung, wie z.B. eine Fahrt mit einer Strassenbahn oder ein Besuch eines Ausstellungsraumes, verbunden sein kann, ist ein besonders zuverlässiges Wecken und eine zuverlässige Uebertragung gefordert. Insbesondere werden solche Smart-Cards in Verkehrsmitteln in Verbindung mit einem in einem Fahrzeug angebrachten Sendegerät angewendet. Vorzugsweise werden diese Sendegeräte im Zugangsbereich angeordnet. Die von Personen getragenen Smart-Cards weisen eine beliebige Orientierung auf, insbesondere auch relativ zu den magnetischen Wechselfeldlinien und relativ zu einem Sendegerät. Dadurch kann nicht immer in der Antenne einer Smart-Card die erforderliche Spannung $U_i(t)$ induziert werden: Für die Spannung $U_i(t)$ gilt die Proportionalitätsbeziehung ;

$$U_i(t) \ \sim \ \frac{d}{dt}\int_A B\,dA \quad .$$

Dabei steht A für die Fläche der Smart-Card und B für die magnetische Induktion, B und dA sind vektorielle Grössen und miteinander über das Skalarprodukt verknüpft.

Der vorliegenden Erfindung liegt daher die Aufgabe zugrunde ein Verfahren und ein System zur Erzeugung eines Magnetwechselfeldes anzugeben, so dass unabhängig von der Lage einer auf einer Smart-Card befindlichen Antenne relativ zu einer fest angebrachten Antennenanordnung eine genügende Spannung induziert wird.

Diese Aufgabe wird durch die in den Patentansprüchen 1, 11 und 21 angegebenen Massnahmen gelöst. Vorteilhafte Ausgestaltungen der Erfindung sind in weiteren Ansprüchen angegeben.

So können sich die folgenden Vorteile zusätzlich ergeben:

i) Durch die einfache geometrische Form der erfindungsgemässen Antennenanordnung mit den zugeführten periodischen Signalen ergibt sich eine leichte Installierbarkeit im Zugangsbereich eines Fahrzeugs oder Raumes (Patentanspruch 4)

ii) Je nach Geometrie des Zugangsbereiches ist eine einzige Antennenanordnung ausreichend, da durch eine Einstellung der Ebenen der Rahmenantennen die Magnetfeldverteilung optimiert werden kann (Patentansprüche 6, und 16).

iii) In einer kaskadierten Anordnung der erfindungsgemässen Antennenanordnung mit einer der Kaskade entsprechenden Beschaltung kann auch in einem grösseren Raumbereich, z.B. in einem Eisenbahnwagen, ein quasi-isotropes Magnetwechselfeld erzeugt werden (Patentanspruch 31).

Die Erfindung wird nachfolgend anhand der Zeichnung beispielsweise näher erläutert. Dabei zeigen:

Fig. 1a     eine Antennenanordnung mit zwei zueinander orthogonalen Rahmenantennen mit zugehörigen H-Feld-Basisvektoren;

Fig. 1b     in Kombination mit Figur 1a drei zu einander orthogonale Rahmenantennen mit dem zugehörigen H-Feld-Basisvektor;

Fig. 2    eine Anordnung von je zwei zueinander paralleler Rahmenantennen;

Fig. 3a    Darstellung des resultierenden Magnetwechselfeldes unter Verwendung zweier Rahmenantennen;

Fig. 3b    Darstellung des resultierenden Magnetwechselfeldes bei Amplituden-Modulation der z-Komponente unter Verwendung dreier Rahmenantennen;

Fig. 4    Positionierung einer Antennenanordnung im Zugangsbereich eines Eisenbahnwagens;

Fig. 5    Verlauf des Betrages der Feldstärke H längs einer kaskadierten Positionierung der erfindungsgemässen Antennenanordnung mit einer der Kaskade entsprechenden Beschaltung;

Fig. 6    Blockschaltbild zur Erzeugung von drei je einer Rahmenantenne zuzuführenden Ströme $I_x$, $I_y$ und $I_z$.

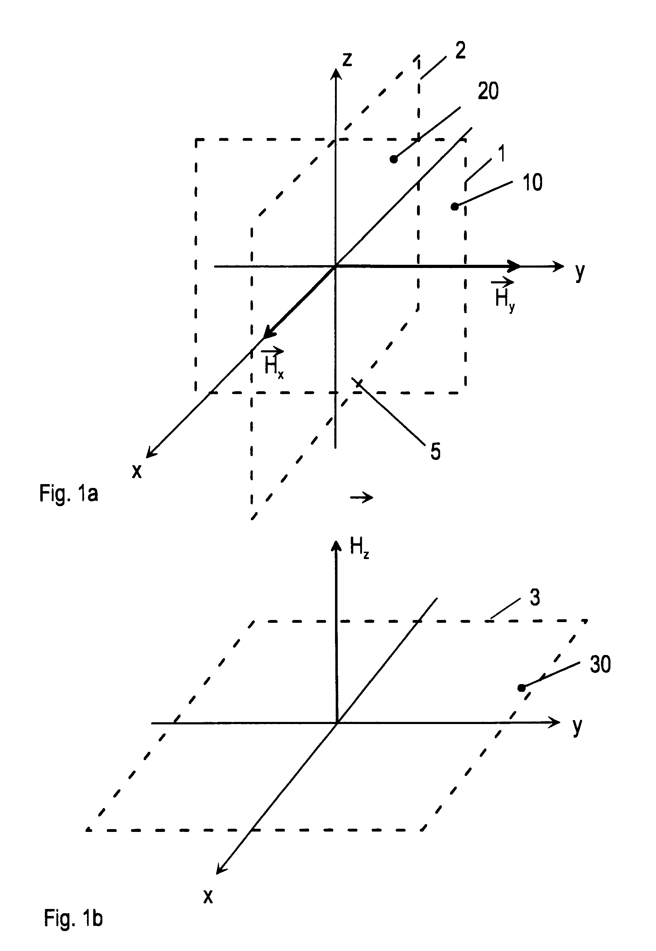

Figur 1 zeigt durch die strichliiert dargestellten Rechtecke 10 und 20 zwei zueinander im wesentlichen rechtwinklig ineinander angeordnete Rahmenantennen, nämlich eine erste Rahmenantenne 1 und eine zweite Rahmenantenne 2. Den Rechtecken (und Ebenen) 10 und 20 ist als Momentanwert je ein Basisvektor $\vec{H}_x$ und $\vec{H}_y$ zugeordnet, die in einer Superposition einen resultierenden Vektor $\vec{H}$ ergeben (in Fig. 1a nicht dargestellt). Im strengen Sinne gibt es keine isotrope Polarisation wegen der Forderung der Gleichzeitigkeit. Unter einer quasi-isotropen Polarisation wird im folgenden eine in einen lokal begrenzten Bereich (Zugangsbereich) über eine bestimmte Zeitdauer isotrope Polarisation bezeichnet. Die Zeitdauer kann beispielsweise 0,1 ms entsprechend einer Frequenz von 10 kHz betragen. Die Isotropie ergibt sich somit nacheinander verschiedene Richtungen des Magnetwechselfeldes H.

Einer Antennenanordnung gemäss Fig. 1a werden Ströme $I_x(t)$ und $I_y(t)$ zugeführt, wobei die Proportionalitätsbeziehung gilt:

$I_x \sim H_x$ und $I_y \sim H_y$ .

Im folgenden werden die zeitlichen Grössen unter Voraussetzung der vorstehenden Proportionalitätsbeziehung stets als H-Feld bzw. als H-Feld-Komponente angegeben:

$H_x = H_0 \cdot \sin \omega t$ , $H_x$ steht für den Betrag von $\vec{H}_x$ ,

$H_y = H_0 \cdot \sin (\omega t + {}^\Pi\!/_2)$ .

Die Grösse $\omega$ ist die Kreisfrequenz gemäss der Verknüpfung $\omega := 2\Pi f$, wobei die Frequenz f beispielsweise 6.78 MHz beträgt.

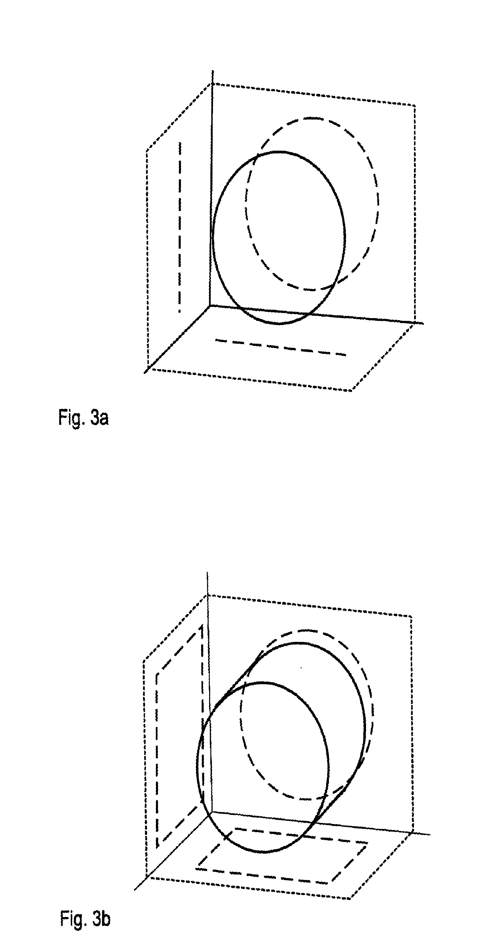

Der resultierende Vektor $\vec{H} := \vec{H}_x + \vec{H}_y$ dreht sich in einer Ebene gemäss der Darstellung in Fig. 3a mit den drei Projektionen in einem orthogonalen Koordinatensystem. Diese Polarisation wird als zirkular bezeichnet. Gemäss der vorstehend aufgeführten Definition wird diese Polarisation als quasi-isotrop betrachtet. Die Ebenen 10 und 20 der Rahmenantennen 1 und 2 sind nicht planparallel; in einer besonderen Ausführungsform können diese Ebenen zueinander im

Bereich 90° $\pm\delta$ einstellbar sein, um die Beeinflussung durch metallische Wände im Zugangsbereich ausgleichen zu können. Der Wert von $\delta$ kann z.B. im Bereich von 5° liegen.

Mit einem solchen Magnetwechselfeld $\vec{H}$ können in einem Zugangsbereich sämtliche elektronischen Billette erfasst werden, die über den ganzen Bewegungsablauf nicht planparallel zur Zirkulationsebene liegen. Ein solches elektronisches Billett wird dabei üblicherweise von einer Person in einer Tasche oder in der Geldbörse getragen.

Eine weitere Verbesserung zur Quasi-Isotropie eines Magnetwechselfeldes ergibt sich, wenn eine dritte Rahmenantenne 3 verwendet wird. Diese dritte Rahmenantenne 3 ist aus Uebersichtlichkeitsgründen abgesetzt zur Fig. 1a in der Fig. 1b dargestellt ist. Die Ebene 30 der dritten Rahmenantenne 3 ist dabei vorzugsweise orthogonal zu den beiden Ebenen 10 und 20 der Rahmenantennen 1 und 2.

Alternativ kann die dritte Rahmenantenne mit folgenden nachstehend unter a), b) und c) aufgeführten Strömen $I_z(t)$ beaufschlagt werden. Dabei wird wiederum von der Proportionalitätsbeziehung $I_z \sim H_z$ Gebrauch gemacht.

a) Amplitudenmodulation für die z-Komponente:

$H_x := H_0 \cdot \sin \omega t$

$H_y := H_0 \cdot \sin(\omega t + {}^\Pi\!/2)$

$H_z := H_0 \cdot (\sin \omega_2 t) \cdot (\sin \omega t) =$

$\quad = H_0/2 \cdot (\cos(\omega - \omega_2)t - \cos(\omega + \omega_2)t)$

$\omega_2$ steht für die Modulationsfrequenz, dabei gilt $\omega_2 \ll \omega$;

z.B. $\omega_2 = 2\Pi \cdot 10$ kHz.

Der resultierende Vektor $\vec{H} := \vec{H}_x + \vec{H}_y + \vec{H}_z$ überstreicht von einem Mittelpunkt aus den Mantel eines Drehzylinders gemäss der Darstellung in Fig. 3b. Die drei Projektionen auf die Ebenen eines vorzugsweise orthogonalen Koordinatensystems sind ebenfalls in der Fig. 3b dargestellt.

b) Phasenmodulation für die z-Komponente

$H_x = H_0 \cdot \sin \omega t$
$H_y = H_0 \cdot \sin(\omega t + {}^{\Pi}/_2)$
$H_z := H_0 \cdot \sin(\omega t + \varphi)$ , wobei $\varphi = \varphi(t)$ mit einem Wertebereich $W(\varphi) \subset [-{}^{\Pi}/_2, {}^{\Pi}/_2]$, oder in anderer Notation:
Die Funktion $\varphi(t)$ weist Werte im Bereich -90° bis +90° auf.

c) Frequenzoffsetmodulation für die z-Komponente:

$H_x = H_0 \cdot \sin \omega t$
$H_y = H_0 \cdot \sin(\omega t + {}^{\Pi}/_2)$
$H_z := H_0 \cdot \sin(\omega t + \Phi \cdot t')$

wobei: $\Phi$ konstant, $t' := t \bmod T_\varphi$ und mod eine auf der Menge der reellen Zahlen ℝ verallgemeinerte Modulofunktion ist. In einer gegenüber
$\varphi(t) = \Phi \cdot (t \bmod T_\varphi)$ verallgemeinerten Form kann eine Frequenzoffsetmodulation für jede Funktion mit der Eigenschaft $\varphi(t) = \varphi(t + T_\varphi)$ benutzt werden.

In einer weiteren Ausführungsform der vorliegenden Erfindung kann durch eine Amplituden- und Phasenmodulation aller den drei Rahmenantennen zuzuführenden Ströme $I_x$, $I_y$ und $I_z$ ein beliebiger Feldvektor $\vec{H}$ im Raum erzeugt werden.

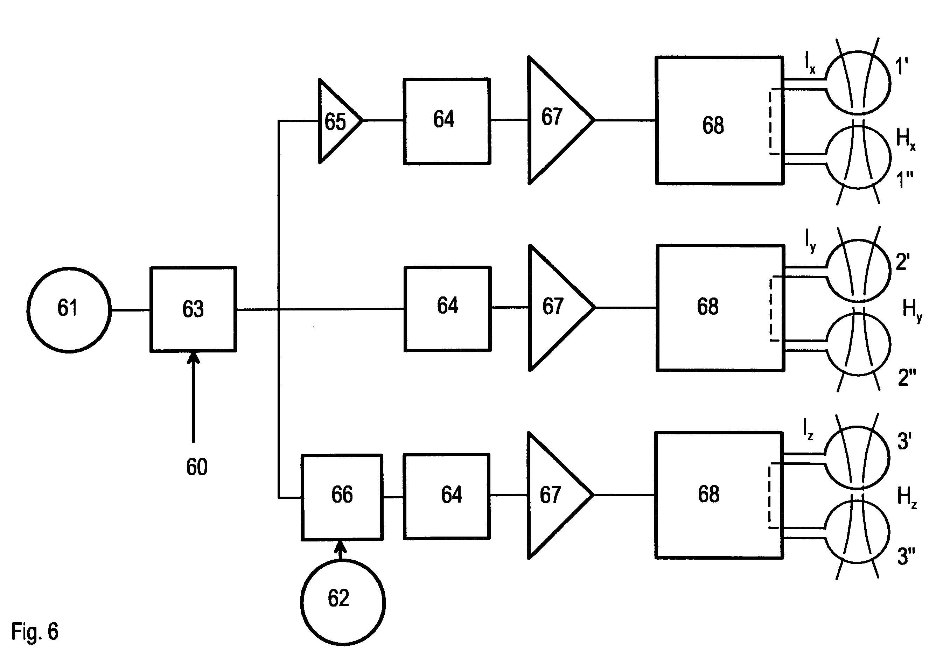

In Fig. 6 ist für die vorstehend unter a) beschriebene Amplitudenmodulation ein Blockschaltbild einer Sendeeinheit 6 für die Erzeugung der Ströme $I_x$, $I_y$ und $I_z$ bzw. der Feldkomponenten $H_x$, $H_y$ und $H_z$ gezeigt. Der Sendeeinheit 6 sind je zwei paarweise im wesentlich parallele Rahmenantennen 1, 1'; 2, 2' sowie 3, 3' zugeordnet. Ein erster Oszillator erzeugt ein Rechtecksignal der Frequenz $f_1$ = 13.56 MHz. Dem ersten Oszillator ist ein On/Off-Modulator 65 nachgeschaltet, über den die zu übertragenden Daten/Informationen 60 dem Rechtecksignal überlagert werden. Mit einem On/Off-Modulator kann eine Puls-Code-Modulation bewirkt werden. Für die x-Komponente wird dem Frequenzteiler 64 ein Inverter vorgeschaltet, dadurch ergibt sich zwischen dem Signal für die x- und y-Komponente eine Phasenverschiebung von ${}^{\Pi}/_2$. Für die z-Komponente ist dem Frequenzteiler 64 eine Phasenschiebeschaltung 66 vorgeschaltet, der ein Signal eines zweiten Oszillators 62 zugeführt wird. Für die Frequenz $f_2$ des zweiten Oszillators gilt wie vorstehend unter der Amplitudenmodulation erläutert: $f_2 \ll f_1$, z.B. $f_2$ = 10 kHz. Die vom Frequenzteiler 64 erzeugten Signale der Frequenz $f := f_1/2$ werden je einem Antennenverstärker 67 zugeführt und von dort über je eine Anpass-Schaltung 68 den Rahmenantennen 1, 1'; 2, 2' und 3, 3' zugeführt.

Die zu übermittelnde Information 62 mittels einer Informationseinheit INF weist beispielsweise für eine Anwendung als elektronisches Billett eine Struktur gemäss Tabelle 1 auf.

Informationseinheit INF:

Tabelle 1

| Informationsfelder | Bedeutung |
|---|---|
| CYCLE | Zeiteinheit und Zeitbezug |
| COMMAND | Befehle an das Billett 7 |
| POSITION | Ort |
| COURSE | Kursnummer |
| DATETIM2 | Datum und Uhrzeit |
| TYPE | Art des Verkehrsmittels |
| ADDRESS | Adresse einer im Fahrzeug befindlichen Sende-/Empfangseinheit |
| APPLICATION | Anwendung |

Eine solche Informationseinheit INF, auch Record INF genannt, weist z.B. eine Grösse von (4+1+2+2+4+1+4+2) Byte = 20 Byte auf. Für die Sicherung der Uebertragung und für eine allfällige Verschlüsselung ist noch eine zusätzliche Uebertragungskapazität erforderlich.

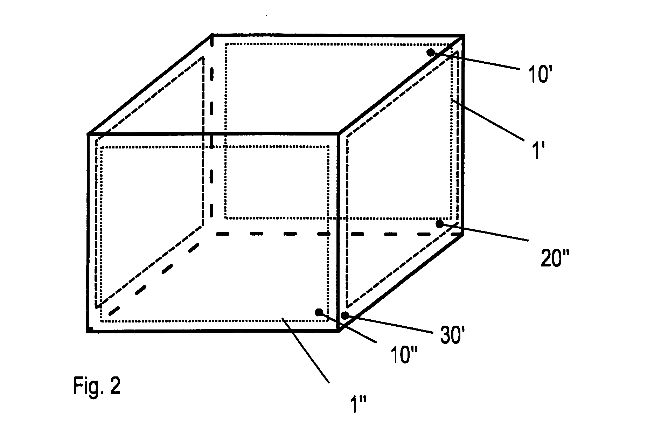

Die Ausführung der Antennenanordnung 5 kann gemäss der Fig. 1a und 1b erfolgen, je nach verlangter Feldstärke können mehrere Windungen 4 für die drei Rahmenantennen 1, 2 und 3 vorgesehen sein. Aus Symmetriegründen werden für die Rahmenantennen 1 und 2 vorzugsweise die gleiche Windungszahl gewählt. Abweichend zur Darstellung in Fig. 6 kann für die z-Komponente auch nur eine in einer Ebene befindliche Rahmenantenne 3 vorgesehen sein, wie dies schemaartig in der Fig. 2 dargestellt ist. Die Rahmenantenne 1 ist in zwei Teilrahmenantennen 1' und 1" gegliedert, deren Ebenen im wesentlichen zueinander planparallel sind. Diese Gliederung in zwei Teilrahmenantennen kann für eine beliebige Auswahl der zwei oder drei Rahmenantennen 1, 2 und 3 erfolgen. Aus Uebersichtlichkeitsgründen ist dies in Fig. 2 nicht vollständig dargestellt. Je nach konstruktiver Ausgestaltung der Rahmen oder Teilrahmenantenne sind diese nicht umfassend in einer Ebene angeordnet, sondern nur im wesentlichen in einer Ebene. Ebenso ist es in einer weiteren Ausführungsform der vorliegenden Erfindung möglich, wie in Fig. 1a und 1b angedeutet, dass zwei oder drei Rahmenantennen 1, 2 und 3 ineinander angeordnet sind.

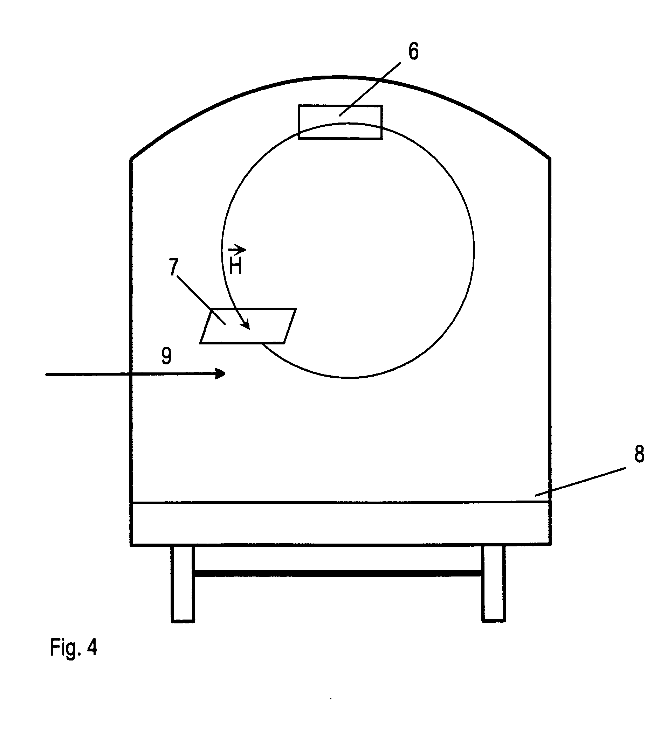

In der Fig. 4 ist die Situation zu einem bestimmten Zeitpunkt t im Zugangsbereich gezeigt. Damit die Billette 7 von dem vor der Antennenanordnung 5 erzeugten Feld $\vec{H}$ tatsächlich geweckt werden, müssen die durch die Billettfläche durchdringenden Feldlinien $\vec{H}$ bzw. Flussdichte $\vec{B}$ eine minimale Induktion hervorrufen, die proportional dem folgenden Integral ist:

$$\int_A B\, dA$$

, A steht für die Fläche des Billettes 7.

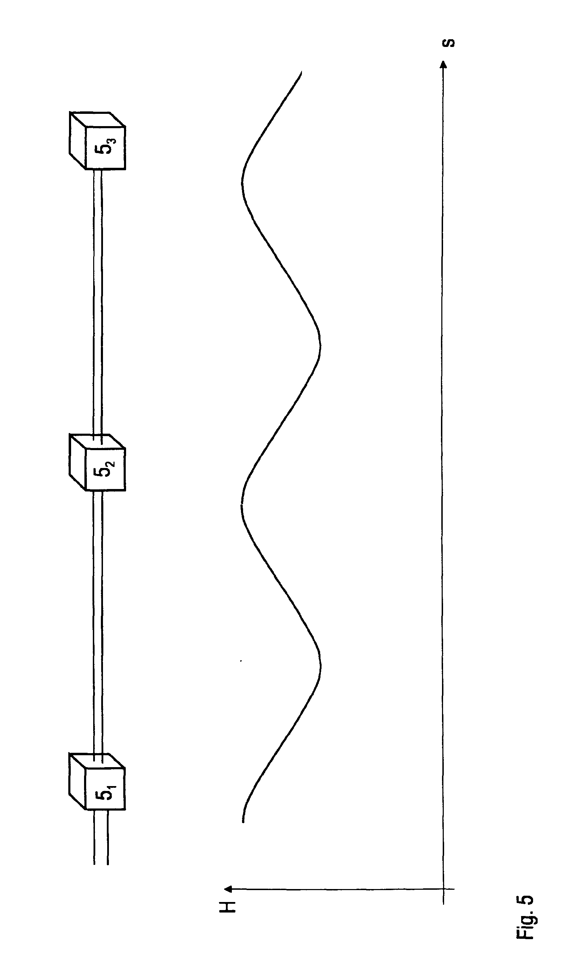

Je nach Anwendung ist es erforderlich, dass der Weckvorgang nicht auf einen Zugangsbereich beschränkt ist, sondern in einem grösseren Bereich eines Raumes, z.B. in einem Eisenbahnwagen, erfolgen soll. In einer weiteren Ausführungsform der vorliegenden Erfindung wird diese Aufgabe durch eine mehrfache Längspositionierung von Antennenanordnungen $5_1$, $5_2$, $5_3$ gelöst. Die prinzipielle Anordnung sowie der Betrag $\vec{H} := |\vec{H}|$ des resultierenden quasi-isotropen Feldes H ist der Fig. 5 zu entnehmen. Während für die Ansteuerung einer einzigen Antennenanordnung 5 eine Sendeeinheit 6 gemäss der Fig. 6 vorgesehen ist, kann die Ansteuerung der einzelnen Antennenanordnungen $5_1$, $5_2$, $5_3$ passiv mit je einem Anpassnetzwerk (nicht dargestellt) erfolgen, um längs der angeordneten Antennenanordnungen $5_1$, $5_2$, $5_3$ ein optimal quasi-isotropes Magnetwechselfeld zu erhalten. Die Anpassnetzwerke von der Art einer Anpass-Schaltung 68 sind dabei einzeln oder in Serie mit einer Sendeeinheit 6 gemäss Fig. 6 verbunden. Mit dem Anpassnetzwerk können insbesondere die Phasen der einzelnen den jeweiligen Rahmenantennen zuzuführenden Ströme $I_x$, $I_y$ und $I_z$ verändert werden.

Liste der verwendeten Bezugszeichen

| | |
|---|---|
| 1 | Erste Rahmenantenne |
| 1', 1" | erste Teilrahmenantennen |
| 2 | Zweite Rahmenantenne |
| 2',2" | zweite Teilrahmenantennen |
| 3 | Dritte Rahmenantenne |
| 3',3" | dritte Teilrahmenantennen |
| 4 | Windungen einer Rahmenantenne |
| 5 | Antennenanordnung |
| $5_1$,$5_2$, $5_3$ | längs angeordnete Antennenanordnungen |
| 6 | Sendeeinheit |
| 7 | Elektronisches Billett |
| 8 | Wagen |
| 9 | Zugangsrichtung |
| 10 | Ebene der ersten Rahmenantenne |
| 10',10" | Ebenen der ersten Teilrahmenantennen |
| 20 | Ebene der zweiten Rahmenantenne |
| 20',20" | Ebenen der zweiten Teilrahmenantennen |
| 30 | Ebene der dritten Rahmenantenne |
| 30',30" | Ebenen der dritten Teilrahmenantennen |
| 60 | Einspeisung der zu übertragenden Information INF |
| 61 | Erster Oszillator, $f_1$ = 13.56 MHz |
| 62 | Zweiter Oszillator, $f_2$ = 10 kHz |
| 63 | On/Off-Modulator für Amplitudenmodulation |
| 64 | Teiler; ":2", getriggert auf eine fallende Flanke |

| 65 | Inverter |
|---|---|
| 66 | Phasenschiebeschaltung |
| 67 | Antennenverstärker |
| 68 | Anpass-Schaltung |

**Patentansprüche**

1. Verfahren zur Erzeugung eines Magnetwechselfeldes ($\vec{H}$) für eine Informationsübertragung mit einer Antennenanordnung (6) und einer zugeordneten Sendeeinheit (5), **dadurch gekennzeichnet, dass** die Antennenanordnung (6) eine erste und eine zweite je im wesentlichen ebene Rahmenantenne (1, 2) mit wenigstens einer Windung (4) aufweist, wobei die durch die beiden Rahmenantennen (1, 2) definierten Ebenen (10, 20) nicht planparallel sind und den Rahmenantennen (1, 2) je ein periodisches Signal ($H_x$, $H_y$; $\omega$) von der Sendeeinheit (5) zugeführt wird, wodurch von der Antennenanordnung (6) ein quasi-isotropes Magnetwechselfeld ($\vec{H}$) erzeugt wird.

2. Verfahren nach Patentanspruch 1, **dadurch gekennzeichnet, dass** die Signale ($H_x$, $H_y$; $\omega$) zueinander phasen-verschoben ($^{\Pi}/_2$) sind.

3. Verfahren nach Patentanspruch 1 oder 2, **dadurch gekennzeichnet, dass** den Signalen ($H_x$, $H_y$; $\omega$) durch eine Modulation (63) wenigstens eine Informationseinheit (INF) aufgeprägt ist.

4. Verfahren nach einem der Patentansprüche 1 bis 3, **dadurch gekennzeichnet, dass** die durch die Rahmenantennen (1, 2) definierten Ebenen (10, 20) im wesentlichen zueinander orthogonal einstellbar sind oder dass die Rahmenantennen (1, 2) ineinander angeordnet sind.

5. Verfahren nach einem der Patentansprüche 1 bis 4, **dadurch gekennzeichnet, dass** die Antennenanordnung (6) eine dritte im wesentlichen ebene Rahmenantenne (3) aufweist und die durch die dritte Rahmenantenne (3) definierte Ebene (30) zu den anderen beiden durch die erste und zweite Rahmenantenne (1, 2) definierten Ebenen (10, 20) nicht planparallel ist und der dritten Rahmenantenne (3) ein moduliertes periodisches Signal ($H_z$; $\omega$) von der Sendeeinheit (5) zugeführt wird.

6. Verfahren nach Patentanspruch 5, **dadurch gekennzeichnet, dass** die durch die Rahmenantennen (1, 2, 3) definierten Ebenen (10, 20, 30) paarweise im wesentlichen zueinander orthogonal einstellbar sind.

7. Verfahren nach Patentanspruch 5 oder 6, **dadurch gekennzeichnet, dass** das der dritten Rahmenantenne (3) zugeführte Signal ($H_z$; $\omega$) amplitudenmoduliert ist.

8. Verfahren nach Patentanspruch 5 oder 6, **dadurch gekennzeichnet, dass** die Modulation des der dritten Rahmenantenne (3) zugeführten Signals ($H_z$; $\omega$) durch eine Phasenverschiebung ($\varphi$ (t)) mit einer periodischen Funktion ( $\varphi(t) = \varphi(t+T_\varphi)$ ) gebildet wird.

9. Verfahren nach Patentanspruch 8, **dadurch gekennzeichnet, dass** die Phasenverschiebung ($\varphi(t)$) durch eine Frequenzoffsetmodulation gebildet wird.

10. Verfahren nach einem der Patentansprüche 1 bis 9, **dadurch gekennzeichnet, dass** wenigstens eine Rahmenantenne (1, 2) so in zwei im wesentlichen ebene Teilrahmenantennen (1', 1''; 2'; 2'', 3', 3'') gegliedert ist, so dass jede Teilrahmenantenne (1', 1''; 2'; 2'',3', 3'') wenigstens eine Windung (4) aufweist, und die durch die Teilrahmenantennen (1', 1''; 2'; 2'',3', 3'') definierten Ebenen (10', 10'', 20', 20'', 30', 30'') im wesentlichen planparallel sind.

11. System zur Erzeugung eines Magnetwechselfeldes ($\vec{H}$) für eine Informationsübertragung mit einer Antennen-ordnung (6) und einer zugeordneten Sendeeinheit (5), **dadurch gekennzeichnet, dass** die Antennenanordnung (6) eine erste und eine zweite je im wesentlichen ebene Rahmenantenne (1, 2) mit wenigstens einer Windung (4) aufweist, wobei die durch die beiden Rahmenantennen (1, 2) definierten Ebenen (10, 20) nicht planparallel sind und den Rahmenantennen (1, 2) je ein periodisches Signal ($H_x$, $H_y$; $\omega$) von der Sendeeinheit (5) zuführbar ist, wodurch von der Antennenanordnung (6) ein quasi-isotropes Magnetwechselfeld ($\vec{H}$) erzeugt wird.

12. System nach Patentanspruch 11, **dadurch gekennzeichnet, dass** die Signale ($H_x$, $H_y$; $\omega$) zueinander phasenver-schiebbar ($^{\Pi}/_2$) sind.

**13.** System nach Patentanspruch 11 oder 12, **dadurch gekennzeichnet, dass** den Signalen ($H_x$, $H_y$; $\omega$) durch eine Modulation (63) wenigstens eine Informationseinheit (INF) aufprägbar ist.

**14.** System nach einem der Patentansprüche 11 bis 13, **dadurch gekennzeichnet, dass** die durch die Rahmenantennen (1, 2) definierten Ebenen (10, 20) im wesentlichen zueinander orthogonal einstellbar sind oder dass die Rahmenantennen (1, 2) ineinander angeordnet sind.

**15.** System nach einem der Patentansprüche 11 bis 14, **dadurch gekennzeichnet, dass** die Antennenanordnung (6) eine dritte im wesentlichen ebene Rahmenantenne (3) aufweist und die durch die dritte Rahmenantenne (3) definierte Ebene (30) zu den anderen beiden durch die erste und zweite Rahmenantenne (1, 2) definierten Ebenen (10, 20) nicht planparallel ist und der dritten Rahmenantenne (3) ein moduliertes periodisches Signal ($H_z$; $\omega$) von der Sendeeinheit (5) zuführbar ist.

**16.** System nach Patentanspruch 15, **dadurch gekennzeichnet, dass** die durch die Rahmenantennen (1, 2, 3) definierten Ebenen (10, 20, 30) paarweise im wesentlichen zueinander orthogonal einstellbar sind.

**17.** System nach Patentanspruch 15 oder 16, **dadurch gekennzeichnet, dass** das der dritten Rahmenantenne (3) zugeführte Signal ($H_z$; $\omega$) amplitudenmodulierbar ist.

**18.** System nach Patentanspruch 15 oder 16, **dadurch gekennzeichnet, dass** die Modulation des der dritten Rahmenantenne (3) zugeführten Signals ($H_z$; $\omega$) durch eine Phasenverschiebung ($\varphi$) mit einer periodischen Funktion ( $\varphi(t) = \varphi(t+T_\varphi)$ ) bildbar ist.

**19.** System nach Patentanspruch 18, **dadurch gekennzeichnet, dass** die Phasenverschiebung ($\varphi(t)$) durch eine Frequenzoffsetmodulation bildbar ist.

**20.** System nach einem der Patentansprüche 11 bis 19, **dadurch gekennzeichnet, dass** wenigstens eine Rahmenantenne (1, 2) so in zwei im wesentlichen ebene Teilrahmenantennen (1', 1''; 2'; 2'') gegliedert ist, so dass jede Teilrahmenantenne (1', 1''; 2'; 2'',3', 3'') wenigstens eine Windung (4) aufweist, und die durch die Teilrahmenantennen (1', 1''; 2'; 2'',3', 3'') definierten Ebenen (10', 10''; 20'; 20'',30', 30'') im wesentlichen planparallel sind.

**21.** Verfahren zur Erzeugung eines Magnetwechselfeldes ($\vec{H}$) für eine Informationsübertragung (INF) von einer Antennenanordnung (6) und einer zugeordneten Sendeeinheit (5) zu einem tragbaren Empfangsmodul (7), welches im Magnetwechselfeld ($\vec{H}$) frei bewegbar ist, **dadurch gekennzeichnet, dass** die Antennenanordnung (6) eine erste und eine zweite je im wesentlichen ebene Rahmenantenne (1, 2) mit wenigstens einer Windung (4) aufweist, wobei die durch die beiden Rahmenantennen (1, 2) definierten Ebenen (10, 20) nicht planparallel sind und den Rahmenantennen (1, 2) je ein periodisches Signal ($H_x$, $H_y$; $\omega$) von der Sendeeinheit (5) zugeführt wird, wodurch von der Antennenanordnung (6) ein quasi-isotropes Magnetwechselfeld ($\vec{H}$) abgestrahlt wird und auf einer auf dem Empfangsmodul (7) angeordneten Rahmenantenne eine Induktion für einen Informationsempfang (INF) erfolgt.

**22.** Verfahren nach Patentanspruch 21, **dadurch gekennzeichnet, dass** die Signale ($H_x$, $H_y$; $\omega$) zueinander phasenverschoben ($^{\Pi}/_2$) sind.

**23.** Verfahren nach Patentanspruch 21 oder 22, **dadurch gekennzeichnet, dass** den Signalen ($H_x$, $H_y$; $\omega$) durch eine Modulation (63) wenigstens eine Informationseinheit (INF) aufgeprägt ist.

**24.** Verfahren nach einem der Patentansprüche 21 bis 23, **dadurch gekennzeichnet, dass** die durch die Rahmenantennen (1, 2) definierten Ebenen (10, 20) im wesentlichen zueinander orthogonal einstellbar sind oder dass die Rahmenantennen (1, 2) ineinander angeordnet sind.

**25.** Verfahren nach einem der Patentansprüche 21 bis 24, **dadurch gekennzeichnet, dass** die Antennenanordnung (6) eine dritte im wesentlichen ebene Rahmenantenne (3) aufweist und die durch die dritte Rahmenantenne (3) definierte Ebene (30) zu den anderen beiden durch die erste und zweite Rahmenantenne (1, 2) definierten Ebenen (10, 20) nicht planparallel ist und der dritten Rahmenantenne (3) ein moduliertes periodisches Signal ($H_z$; $\omega$) von der Sendeeinheit (5) zugeführt wird.

**26.** Verfahren nach Patentanspruch 25, **dadurch gekennzeichnet, dass** die durch die Rahmenantennen (1, 2, 3) definierten Ebenen (10, 20, 30) paarweise im wesentlichen zueinander orthogonal einstellbar sind.

27. Verfahren nach Patentanspruch 25 oder 26, **dadurch gekennzeichnet, dass** das der dritten Rahmenantenne (3) zugeführte Signal ($H_z$; $\omega$) amplitudenmoduliert ist.

28. Verfahren nach Patentanspruch 25 oder 26, **dadurch gekennzeichnet, dass** die Modulation des der dritten Rahmenantenne (3) zugeführten Signals ($H_z$; $\omega$) durch eine Phasenverschiebung ($\varphi$) mit einer periodischen Funktion ( $\varphi(t) = \varphi(t+T_\varphi)$ ) gebildet wird.

29. Verfahren nach Patentanspruch 28, **dadurch gekennzeichnet, dass** die Phasenverschiebung ($\varphi(t)$) durch eine Frequenzoffsetmodulation gebildet wird.

30. Verfahren nach einem der Patentansprüche 21 bis 29, **dadurch gekennzeichnet, dass** wenigstens eine Rahmenantenne (1, 2,3) so in zwei im wesentlichen ebene Teilrahmenantennen (1', 1''; 2'; 2'',3', 3'') gegliedert ist, so dass jede Teilrahmenantenne (1', 1''; 2'; 2'', 3', 3'') wenigstens eine Windung (4) aufweist, und die durch die Teilrahmenantennen (1', 1''; 2'; 2'',3', 3'') definierten Ebenen (10', 10''; 20'; 20'',30', 30'') im wesentlichen planparallel sind.

31. Verfahren nach einem der Patentansprüche 1 bis 10 oder 21 bis 30, **dadurch gekennzeichnet, dass** mehrere Antennnenanordnungen (6) längs angeordnet sind und durch eine die gegenseitige Lage der Antennenanordnung (6)berücksichtigende Beschaltung (5) längs der angeordneten Antennenanordnungen (6) ein quasi-isotropes Magnetwechselfeld ($\vec{H}$) erzeugt wird.

Fig. 1a

Fig. 1b

Fig. 2

Fig. 3a

Fig. 3b

Fig. 4

$5_1$

$5_2$

$5_3$

H

s

Fig. 5

Fig. 6

Europäisches
Patentamt

## EUROPÄISCHER RECHERCHENBERICHT

Nummer der Anmeldung

EP 00 11 6069

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | FR 2 776 864 A (GEMPLUS CARD INT) 1. Oktober 1999 (1999-10-01)<br><br>* Seite 3, Zeile 26 - Seite 4, Zeile 30; Abbildungen 1-3 *<br>---- | 1,3-6, 10,11, 13-16, 20,21, 24-26, 30,31 | G06K7/10 G06K7/08 |
| X | US 5 258 766 A (MURDOCH GRAHAM A M) 2. November 1993 (1993-11-02)<br><br>* Spalte 7, Zeile 9 - Spalte 8, Zeile 26; Abbildung 7 *<br>----- | 1,3-6, 10,11, 13-16, 20,21, 24-26, 30,31 | |

RECHERCHIERTE SACHGEBIETE (Int.Cl.7)

G06K

Der vorliegende Recherchenbericht wurde für alle Patentansprüche erstellt

| Recherchenort | Abschlußdatum der Recherche | Prüfer |
|---|---|---|
| DEN HAAG | 7. Dezember 2000 | Chiarizia, S |

EP 1 176 542 A1

**ANHANG ZUM EUROPÄISCHEN RECHERCHENBERICHT
ÜBER DIE EUROPÄISCHE PATENTANMELDUNG NR.**

EP 00 11 6069

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-12-2000

| Im Recherchenbericht angeführtes Patentdokument | Datum der Veröffentlichung | Mitglied(er) der Patentfamilie | Datum der Veröffentlichung |
|---|---|---|---|
| FR 2776864 A | 01-10-1999 | WO 9950780 A | 07-10-1999 |
| US 5258766 A | 02-11-1993 | AT 124175 T | 15-07-1995 |
| | | AT 178438 T | 15-04-1999 |
| | | AU 635198 B | 18-03-1993 |
| | | AU 2801389 A | 05-07-1989 |
| | | WO 8905530 A | 15-06-1989 |
| | | CA 1336341 A | 18-07-1995 |
| | | DE 3854051 D | 27-07-1995 |
| | | DE 3854051 T | 02-11-1995 |
| | | DE 3856320 D | 06-05-1999 |
| | | DE 3856320 T | 02-12-1999 |
| | | EP 0393103 A | 24-10-1990 |
| | | EP 0608966 A | 03-08-1994 |
| | | HK 1001909 A | 17-07-1998 |
| | | JP 3502269 T | 23-05-1991 |
| | | SG 49628 A | 15-06-1998 |
| | | ZA 8809254 A | 29-08-1990 |

EPO FORM P0461

Für nähere Einzelheiten zu diesem Anhang : siehe Amtsblatt des Europäischen Patentamts, Nr.12/82

17